# EUROPÄISCHE PATENTANMELDUNG

(11) **EP 2 191 907 A2**
(43) Veröffentlichungstag der Anmeldung: **02.06.2010**
(21) Anmeldenummer: 09014797.6
(22) Anmeldetag: 27.11.2009
(51) Int. Cl.: B21D 43/00, B21D 43/20, B21D 7/00

(54) **Metallbearbeitungsmaschine mit Zuführvorrichtung für stabförmige Werkstücke**

(30) Priorität: 28.11.2008 DE 102008059507
(71) Anmelder: MSG Maschinenbau GmbH, 57392 Schmallenberg (DE)
(72) Erfinder: Schulte, Thomas, 59872 Meschede (DE)
(74) Vertreter: Von Renesse, Dorothea

(57) **Zusammenfassung**

Die Erfindung betrifft eine Metallbearbeitungsmaschine mit einer Zuführvorrichtung (12,112) für stabförmige Werkstücke (25,125), wobei die Zuführvorrichtung (12,112) mindestens zwei Treppenelemente aufweist (30,31,130,131), die in Bezug aufeinander zur Beförderung der Werkstücke (25,125) zyklisch verschiebbar oder rotierbar gelagert sind.

## Beschreibung

Die Erfindung betrifft eine Metallbearbeitungsmaschine mit einer Zuführvorrichtung für stabförmige Werkstücke, insbesondere eine Rohrbiegemaschine, mit einem Magazin und einer Vereinzelungseinheit.

Metallbearbeitungsmaschinen, wie Rohrbiegemaschinen oder Maschinen zur Endenbearbeitung, werden in der Praxis überwiegend durch manuelle Zufuhr der Werkstücke gespeist. Nach der Bearbeitung des Werkstücks muß dieses wiederum manuell entnommen werden, damit die Maschine für das nächste Werkstück zur Verfügung steht.

Bei Rohrbiegemaschinen, die einen höheren Automatisierungsgrad aufweisen und vorwiegend für die Bearbeitung hoher Stückzahlen ausgelegt sind, ist das manuelle Einbringen des Rohres in die Maschine oder Aufschieben des Rohres auf den Biegedorn unzweckmäßig. Im Stande der Technik ist es bekannt, Rohrbiegemaschinen mit automatischen Zuführ- und Entnahmevorrichtungen zu bestücken.

So ist beispielsweise aus der DE 29 10 182 A1 eine Rohrbiegemaschine zum Biegen von Rohren auf einem Biegedorn bekannt, die eine Übergabeeinrichtung aufweist, mittels derer jeweils ein Rohr aus einem Rohrmagazin zur Rohrbiegemaschine bewegt wird. Die Übergabeeinrichtung besteht aus einem mit zwei Greifern versehenen Arm, der mittels eines Zylinders vertikal verfahrbar ist und das jeweilige Rohr aus einer Übergabeposition in die Biegeachse bewegt. Das Rohr gelangt dabei aus dem Rohrmagazin in die Übergabeposition, indem es sich über eine in Richtung der Übergabeposition abschüssige Zuführplatte der Gewichtskraft folgend bis zu einem hakenförmigen Vereinzelungselement bewegt, welches aus der Plattenebene herausgeschwenkt wird und dadurch einzelne Rohre für die Übergabeposition freigeben kann.

Bei dieser Vorrichtung besteht der Nachteil, daß die Rohre wiederum manuell auf die geneigte Platte aufgelegt werden müssen. Zudem besteht die Gefahr, daß anstatt eines Rohres zwei Rohre über den aus der Plattenebene herausgeschwenkten Vereinzelungshaken in die Übergabeposition gelangen, wobei dann der Greifer oder das zweite in der Übergabeposition befindliche Rohr bei der Aufnahme des ersten Rohres durch den Greifer beschädigt werden können.

Dieses Problem vermeidet die in der deutschen Offenlegungsschrift 28 32 980 beschriebene Vereinzelungsvorrichtung, die mit Hilfe eines Kettenförderers mit Mitnehmern auf einem Zuführtisch hintereinander liegende Rohre einzeln in eine erhöhte Lage transportiert, von welcher die Rohre über eine in Richtung der Übergabeposition geneigte Bahn in die Übergabeposition gelangen, von der aus die Rohre dann mittels eines Greifers in die Biegeachse bewegt werden können.

Diese Vorrichtung vermeidet die Gefahr des gleichzeitigen Transports zweier Rohre in die Übergabeposition, wirft jedoch ebenfalls das Problem des Aufbringens der Rohre auf den Zuführtisch auf und verlangt darüber hinaus einen erheblichen Platzbedarf, wenn der Zuführtisch für eine hohe Anzahl von Rohren geeignet sein soll.

Die Rohre müssen somit aus den üblichen Sammelmagazinen, in denen die Rohre in mehreren Schichten gelagert sind, wiederum in eine Ebene gebracht werden, um von dem Kettenförderer als Einzelrohr in die Übergabeposition befördert werden zu können. Dies geschieht manuell.

Aus der DE 100 16 036 C2 ist eine Metallbearbeitungsmaschine bekannt, die eine für die unmittelbare Entnahme von stabförmigen Werkstücken, insbesondere Rohren aus einem Sammelmagazin geeignete Zuführung aufweist.

Der Erfindung liegt die Aufgabe zugrunde, eine Metallbearbeitungsmaschine, insbesondere eine Rohrbiegemaschine zu schaffen, die für ein erweitertes Spektrum an stabförmigen Werkstücken, insbesondere für lange oder gebogene oder ungerade Rohre verschiedener Durchmesser geeignet ist. Unter Rohren oder stabförmigen Werkstücken im Sinne dieser Erfindung ist insbesondere jegliche Art von Körpern zu verstehen, deren Querschnitt im Verhältnis zur Länge klein ist.

Die Aufgabe wird gelöst durch eine Vorrichtung gemäß den unabhängigen Ansprüchen. Vorteilhafte Ausgestaltungen der Erfindung sind den Unteransprüchen zu entnehmen.

Die Erfindung stellt eine Weiterentwicklung der Rohrbearbeitungsmaschine der DE 100 16 036 C2 dar, auf die vollumfänglich Bezug genommen wird.

Die erfindungsgemäße Metallbearbeitungsmaschine weist eine Zuführvorrichtung für stabförmige Werkstücke auf, wobei die Zuführvorrichtung selbst mindestens zwei Treppenelemente (30, 31) aufweist, die in Bezug aufeinander zur Beförderung der Werkstücke zyklisch verschiebbar gelagert sind, wobei die Treppenelemente eine Mehrzahl von Treppenstufen ausbilden, die jeweils zumindest eine Auflagefläche für die stabförmigen Werkstücke aufweisen und ist **dadurch gekennzeichnet, dass** die Treppenelemente eine verstellbare relative Auflagefläche aufweisen.

Das zyklische Verschieben der zwei Treppenelemente zueinander kann sowohl rein translatorisch als auch rein rotatorisch sein als auch eine Überlagerung dieser zwei Bewegungsarten darstellen.

Unter "relativer Auflagefläche" wird erfindungsgemäß die Größe der Auflageflächen eines ersten Treppenelements verstanden, auf denen die stabförmigen Werkstücke während der Beförderung aufliegen, und die während der Beförderung der stabförmigen Werkstücke durch die Lage eines anderen der Treppenelement relativ zu dem ersten Treppenelement definiert wird.

Die weiterentwickelte Metallbearbeitungsmaschine, die im folgenden am Beispiel einer Rohrbiegemaschine für Rohre beschrieben wird, erlaubt nicht nur eine vollständige Automatisierung der Rohrzuführung, insbesondere aus einem Sammelmagazin, sondern auch den Einsatz für gebogene oder besonders lange Rohre oder Rohre verschiedener Durchmesser.

Mit Hilfe der erfindungsgemäß variablen Treppenelemente lassen sich auch mehrlagig in einem Sammelmagazin angeordnete Rohre separieren und unter Vermeidung einer raumbedürftigen Zuführebene über einen kurzen Transportweg unmittelbar in eine Übergabeposition bewegen. Dabei erlaubt die Variabilität bzw. Verstellbarkeit der Zahnmulden der Treppenelemente bzw. der Treppenelemente zueinander einen erweiterten Einsatzbereich für verschiedene Rohrdurchmesser oder Werkstückformen.

Bei einer bevorzugten Ausführungsform sind die Treppenelemente so ausgestaltet, dass eine besonders weite Spanne von Werkstückdurchmessern mit ein und derselben Vorrichtung separiert werden kann. Hierzu können die Auflageflächen zumindest eines der Treppenelemente bezüglich ihrer Größe verstellbar sein, wobei sich "Größe" nicht auf nur auf flächenmäßige Größe beziehen soll, sondern jede Veränderung zumindest einer Abmessung der Auflagefläche umfassen soll.

In einer weiterhin bevorzugten Ausführungsform können die Treppenelemente selbst zueinander verschiebbar sein, um die relative Auflagefläche zu verstellen, beispielsweise mittels eines fixierten und eines beweglichen Treppenelements. Das Verschieben kann vorzugsweise auf Schienen erfolgen..

Vorzugsweise weist die erfindungsgemäße Metallbearbeitungsmaschine eine Zuführvorrichtung auf, die im Eingangsbereich der Treppenelemente eine zwischen dem Sammelmagazin und dem Zahnmuldenschieber angeordnete, für mehrere Werkstücke geeignete Aufnahme besitzt. Eine solche Aufnahme erlaubt den Austausch des Sammelmagazins, ohne die kontinuierliche Werkstückzuführung zu unterbrechen, da sich während des Austauschvorgangs noch eine ausreichende Anzahl von Werkstücken in der Aufnahme befindet. Darüber hinaus erfüllt auch der Zahnmuldenschieber eine solche Pufferfunktion, da selbst, wenn sämtliche Werkstücke aus der Aufnahme in die Zuführvorrichtung übernommen wurden, eine weitere Versorgung der Übergabeposition für einen gewissen Zeitraum gewährleistet ist und notfalls von unten her freiwerdende Positionen der Zuführvorrichtung manuell aufgefüllt werden können, wenn sich beispielsweise der Austauschvorgang des Sammelmagazins unbeabsichtigt verzögert.

Vorzugsweise ist das Magazin verstellbar an der Aufnahme angeordnet, um Profile oder Rohre unterschiedlicher Abmessungen verwenden zu können. Die Kombination eines feststehenden mit einem beweglichen Treppenelement erlaubt bei entsprechender Ausgestaltung der Zahnmulden die Verwendung von Werkstücken unterschiedlichster geometrischer Ausprägung, wie beispielsweise Profile, Vollmaterialien, Vierkant-, Mehrkant-, Rund-, Oval-, offene oder geschlossene Profile sowie Kombinationen der genannten Werkstückformen, oder, wie vorhergehend beispielhaft beschrieben, Rohre.

Die Zahnmulden sind bevorzugt aus materialschonendem Werkstoff, wie beispielsweise Gummi oder Kunststoff ausgebildet, um hochwertige Werkstoffoberflächen, wie bei polierten Rohren, schonend zu transportieren.

In einer weiteren Ausgestaltung der Erfindung kann die Zuführvorrichtung endseitig mit einer Einrichtung zur Kontrolle der Eignung der Werkstücke für die gewünschte Weiterverarbeitung versehen sein, welche zwischen der Zuführvorrichtung und der die Rohre aus der Übergabeposition in die Biegeachse bzw. Bearbeitungsposition bewegenden Transportvorrichtung, wie beispielsweise einem Greiferarm, angeordnet ist.

Die erfindungsgemäße Zuführvorrichtung eignet sich für eine solche Kontrolle besonders, da sie es erlaubt, einzelne Rohre in genau definierter Position zur Verfügung zu stellen. Hierzu kann die Zuführvorrichtung eine Positionierungseinrichtung, wie zum Beispiel eine Justiereinheit, aufweisen, die die Lage des Werkstücks ermittelt und diese über einen Schieber in eine exakt definierte Solllage bewegt. Mit Hilfe der Einheit zur Überprüfung des Werkstückzustandes oder der Lage lassen sich beispielsweise die geometrischen Eigenschaften wie Länge, Durchmesser, Querschnitt, Ovalität, allgemeine Maßhaltigkeit, Sauberkeit oder Oberflächeneigenschaften, wie Rauhigkeit oder Reflektionsvermögen sowie Werkstoffeigenschaften, wie Härte, Leitfähigkeit oder andere physikalisch/chemische Eigenschaften ermitteln. Die Kontrolleinheit kann mit Sollparametern gespeist sein und das einzelne Werkstück bei Überschreiten einer bestimmten Toleranzgrenze als geeignet oder ungeeignet für die Weiterverarbeitung qualifizieren. Hierauf können akustische, optische oder elektrische Signale erzeugt werden, die entweder zu einer Freigabe für die Weiterverarbeitung des Werkstücks oder zu einer gezielten Nachbearbeitung oder Lageveränderung des Werkstückes führen. So kann beispielsweise ein ungeeignetes Werkstück aufgrund eines akustischen Signals manuell entfernt werden oder durch ein elektrisches Signal einen besonderen Greifer aktivieren, der das ungeeignete Werkstück aus der Übergabeposition entfernt.

Das Werkstück kann in der Übergabeposition in seiner Längsachse oder bezüglich der Lage der Schweißnaht, was insbesondere bei zu biegenden geschweißten Rohren von Bedeutung ist, verändert und für die Weiterverarbeitung vorbereitet werden. Die erfindungsgemäße Ausgestaltung der Positionierungseinrichtung ist dabei nicht auf einen Schieber beschränkt, sondern kann darüber hinaus Elemente zur Änderung der Höhenlage und Winkellage des Werkstücks aufweisen. Die Erfindung erlaubt es in der Praxis nicht nur Werkstücke von beispielsweise 8 m Länge zu vereinzeln, sondern auch die problemlose Vereinzelung von beispielsweise 80 Rohren, die gleichzeitig dem Stufenförderer zugeführt werden, wobei der erfindungsgemäße Stufenförderer dann eine sichere Vereinzelung, das heißt Übergabe nur eines einzigen Rohres am oberen Ende gewährleistet.

Die erfindungsgemäße Zuführvorrichtung eignet sich insbesondere zur Zuführung und Vereinzelung von stabförmigen Werkstücken, wie z.B. (metallischen) Rohren und Stangen, bei denen das Verhältnis von Länge zu Durchmesser sehr groß ist. Beispielsweise können damit Rohre zugeführt und vereinzelt werden, die bei einer Länge von 6m lediglich einen Durchmesser von 8mm aufweisen. Ein anderes Beispiel sieht die Vereinzelung von 18m langen Rohren vor, die einen Durchmesser zwischen 20 und 80 mm aufweisen.

Die Erfindung wird im Folgenden anhand von in den Zeichnungen dargestellten Ausführungsbeispielen näher erläutert.

In den Zeichnungen zeigt:
- Fig. 1:: eine erfindungsgemäße Rohrbearbeitungsmaschine mit einer Zuführvorrichtung in einer ersten Ausführungsform;
- Fig. 2:: die Zuführvorrichtung gemäß Fig. 1 mit einer Justiervorrichtung für die Rohre;
- Fig. 3:: in einer isometrischen Ansicht eine erfindungsgemäße Zuführvorrichtung in einer zweiten Ausführungsform;
- Fig. 4:: die Zuführvorrichtung der Fig. 3 in einer Seitenansicht;
- Fig. 5:: die Zuführvorrichtung der Fig. 3 in einer Vorderansicht;

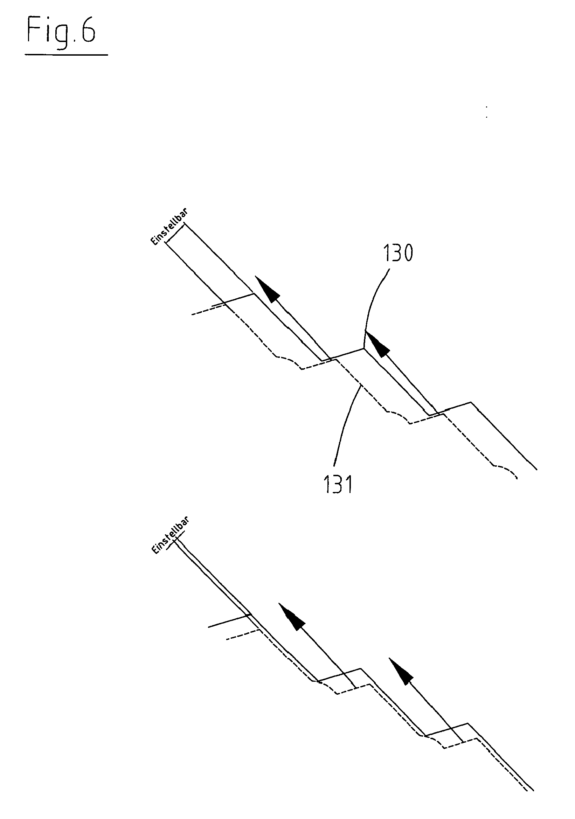

- Fig. 6:: eine schematische Darstellung der Verstellbarkeit der Auflageflächen der Treppenelemente zueinander;

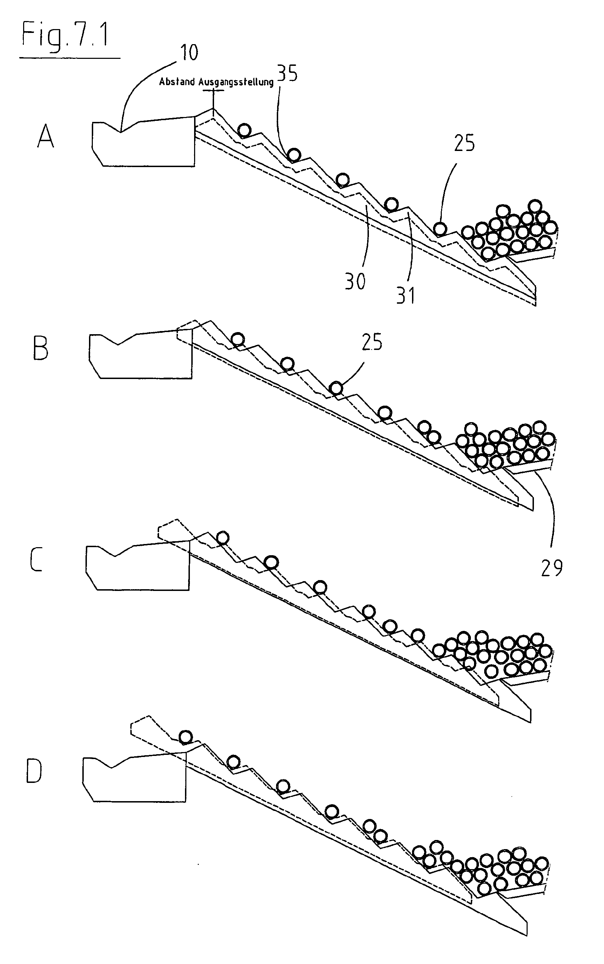

- Fig. 7.1:: eine schematische Darstellung des erfindungsgemäßen Separierungs- und Transportablaufs bei Rohren mit relativ kleinem Durchmesser; und

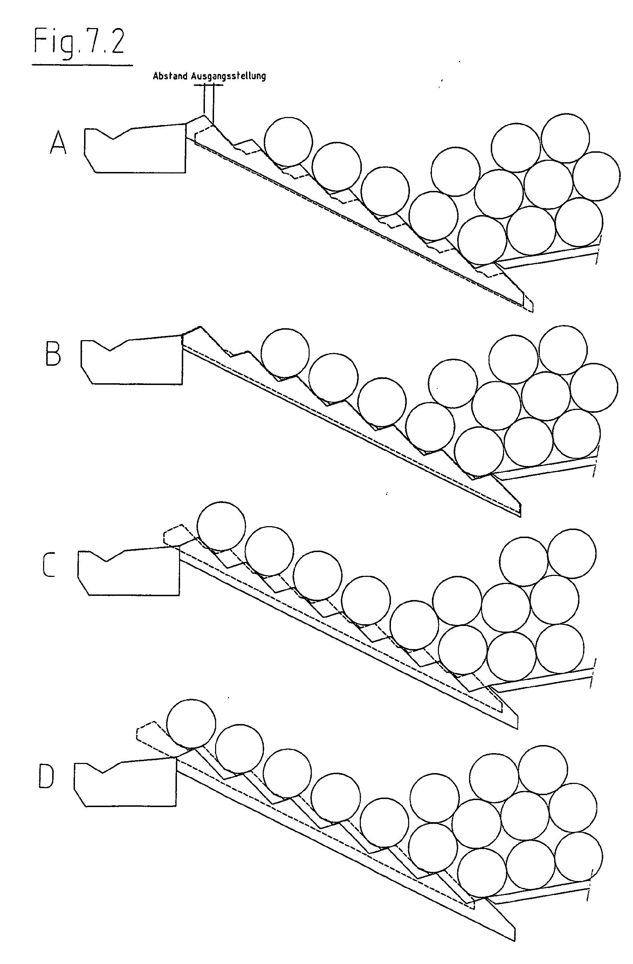

- Fig. 7.2:: eine schematische Darstellung des erfindungsgemäßen Separierungs- und Transportablaufs bei Rohren mit relativ großem Durchmesser.

Eine Rohrbiegemaschine 1 ist bezüglich ihrer Biegeachse B parallel zu der Achse P einer Übergabeposition 10 der Zuführvorrichtung 12 angeordnet. Die Zuführvorrichtung weist ein Rohrmagazin 20 mit einer Vielzahl von in mehreren Ebenen gelagerten Rohren 25 auf. Zwischen der Übergabeposition 10 und dem Rohrmagazin 20 befinden sich zwei relativ zueinander bewegliche Treppenelemente 30, 31 mit Treppenstufen 35. Das Rohrmagazin 20 ist in Richtung der Treppenelemente 30, 31 geneigt, so dass sich die im Rohragazin befindlichen Rohre 25 aufgrund ihrer Schwerkraft in Richtung der Treppenelemente 30, 31 bewegen. Zwischen dem Rohrmagazin 20 und den Treppenelementen 30 ist eine Aufnahme 29 angeordnet, in der sich mehrere Rohre aus dem Rohrmagazin 20 zur Übergabe an die Treppenstufen 35 der Treppenelemente 30, 31 befinden. Im Bereich der Übergabeposition 10 ist eine Meßeinrichtung 4 (z.B. optisch odermechanisch) zur Erfassung der Werkstückqualität angeordnet. Je nach Werkstückqualität gibt die Meßeinrichtung 4 Signale aus, die eine Nachbearbeitung auslösen (Signal 5) oder eine Entfernung des Werkstückes veranlassen (Signal 6). In der Übergabeposition 10 ist ferner eine Meßvorrichtung 18 (z.B. induktiv oder optisch - für die Positionserfassung wie Lage der Schweißnaht, axiale Ausrichtung, etc.) mit einer Positioniervorrichtung angeordnet.

Aus der Übergabeposition 10 können die einzelnen Rohre mit Hilfe eines Greifers 40 entnommen und in die Biegeachse B bewegt werden.

Die Achse P der Übergabeposition 10 ist vorzugsweise so angeordnet, daß das einzelne Rohr 25 mit Hilfe des Greifers 40 ohne Veränderung der Höhenlage des Rohres 25, um in die Biegeachse B der Rohrbiegemaschine 1 zu gelangen, lediglich parallel verschoben werden muss und die Rohrbiegemaschine 1 von vorne beschickt werden kann. Zur optimalen Ausrichtung der Übergabeposition 10 ist die Zuführvorrichtung 12 gemäß R1, R2 beweglich ausgebildet. Ferner kann die Höhenlage der Übergabeposition 10 zur Justierung auf die Ebene der Biegeachse B eingestellt werden.

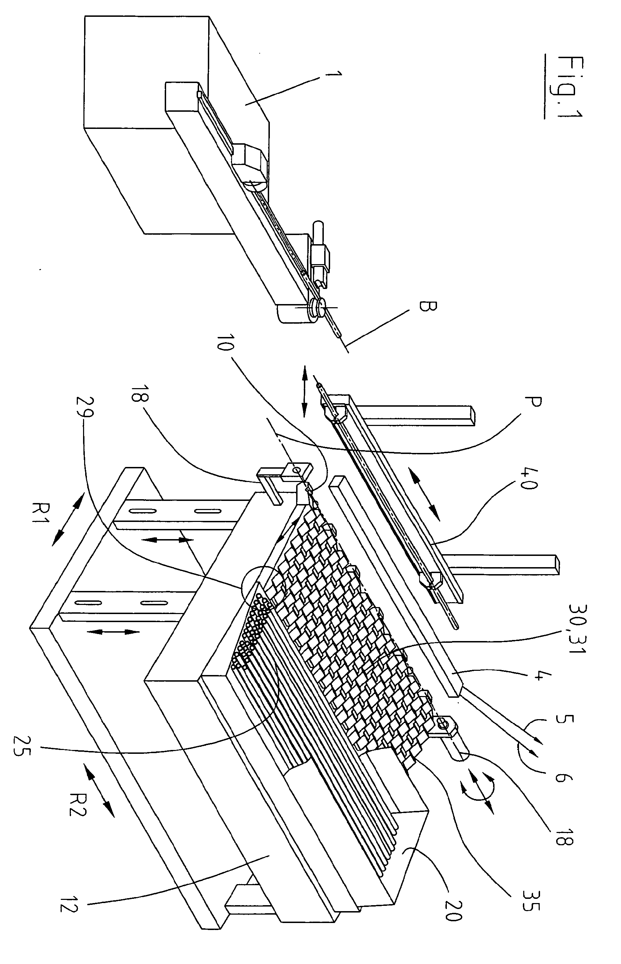

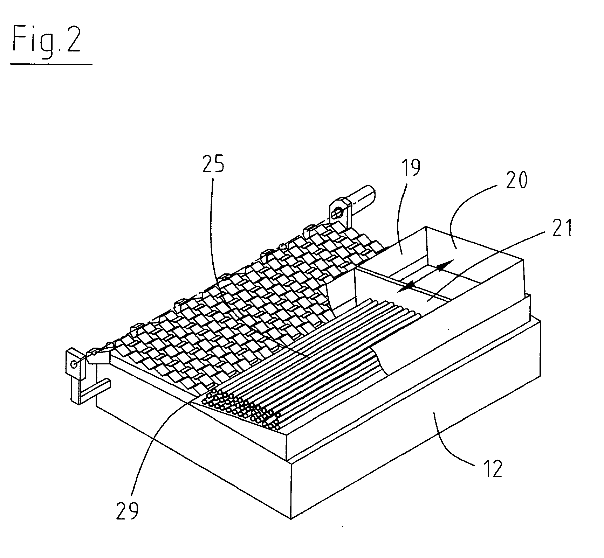

Die Fig. 2 zeigen den Einsatz einer Justiervorrichtung 19 bei der Zuführvorrichtung 12 der Fig. 1. Die Justiervorrichtung umfasst eine verschiebbare Seitenwand 21, mit der die Rohre 25 in eine gewünschte Position in dem Rohrmagazin 20 geschoben werden können.

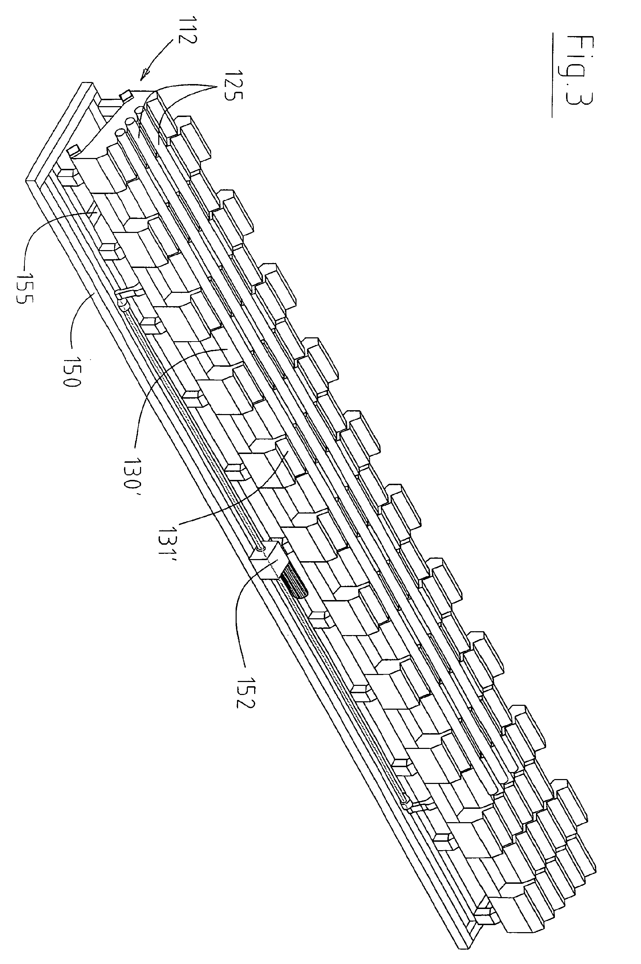

Die Fig. 3 bis 5 zeigen in unterschiedlichen Ansichten eine erfindungsgemäße Zuführvorrichtung 112 in einer alternativen Ausführungsform, die beispielsweise für die Vereinzelung und Zuführung von Rohren 125 zu einer Rohrbiegemaschine, wie sie beispielsweise in der Fig. 1 dargestellt ist, verwendet werden kann.

Die Zuführvorrichtung 112 der Fig. 3 bis 5 weist ein Gestell 150 auf, auf dem ein statisches 130 und ein bewegliches Treppenelement 131 angeordnet sind. Jedes der Treppenelemente 130, 131 weist eine Vielzahl von Treppensegmenten 130', 131' auf, die in einem definierten Abstand zueinander angeordnet sind. Konkret weist das statische Treppenelement 130 elf Treppensegmente 130' und das bewegliche Treppenelement 131 zwölf Treppensegmente 131' auf. Die Treppensegmente 130', 131' der beiden Treppenelemente 130, 131 sind so auf dem Gestell 150 positioniert, dass ein Treppensegment eines Treppenelements in dem Zwischenraum zwischen zwei Treppensegmenten des entsprechenden anderen Treppenelements angeordnet ist (hiervon ausgenommen sind die zwei äußersten Treppensegmente 131' des beweglichen Treppenelements 131). Die Treppenstufen 130", 131" der Treppensegmente 130', 131' der beiden Treppenelemente 130, 131 werden durch jeweils eine Auflage- 130a, 131a und eine Anlagefläche 130b, 131b für ein oder mehrere in der jeweiligen Treppenstufe 130", 131" gelagerte Rohre 125 gebildet.

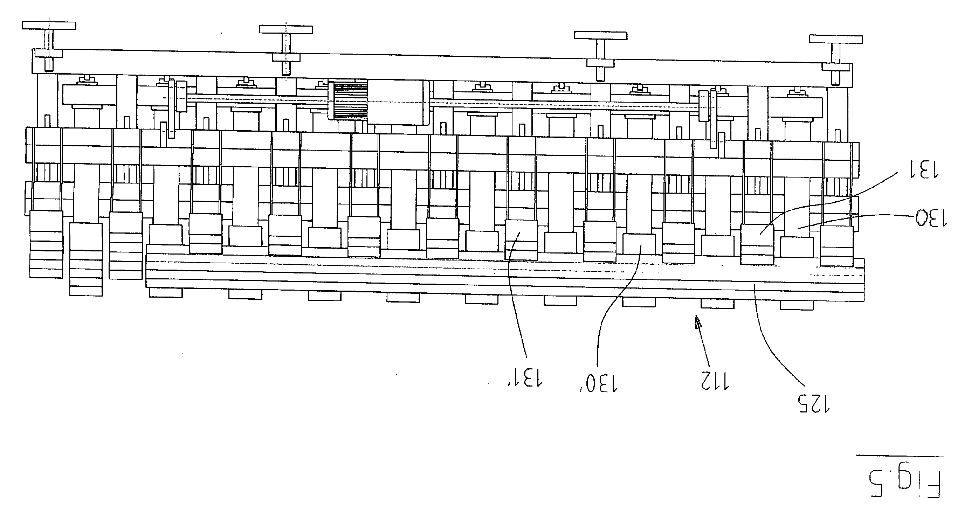

Die Zuführ- und Vereinzelungsfunktion der dargestellten Zuführvorrichtung 112 wird durch eine zyklische Verschiebebewegung des beweglichen Treppenelements 131 zu dem statischen Treppenelement 130 erreicht. Diese Ausgestaltung zeigt sich am deutlichsten in der Fig. 5. Das bewegliche Treppenelement 131 ist hierzu auf zwei Führungsschienen 151 translatorisch beweglich gelagert. Die Bewegung wird durch einen Rotationsantrieb 152, vorliegend einen Elektromotor bewirkt, der über einen Kolben 153 mit dem beweglichen Treppenelement 131 verbunden ist. Der Rotationsantrieb 152 treibt eine Exzenterscheibe 154 an, an der exzentrisch ein Ende des Kolbens 153 drehbar befestigt ist. Das andere Ende des Kolbens 153 ist ebenfalls drehbar an dem beweglichen Treppenelement 131 gelagert. Über die Exzenterscheibe 154 und den Kolben 153 wird die Rotationsbewegung des Rotationsantriebs 152 in eine zyklischtranslatorische Bewegung des beweglichen Treppenelements 131 übersetzt, wobei die Bewegungsrichtung des beweglichen Treppenelements 131 durch die Führungsschienen 151 vorgegeben wird. Diese Übersetzung der Rotationsbewegung in eine zyklischtranslatorische Bewegung führt zudem dazu, dass das Geschwindigkeitsprofil des translatorisch bewegten Treppenelements 131 nicht linear ist, sondern sinusförmig verläuft; d.h. im Bereich des unteren Totpunkts ergibt sich eine kontinuierliche Beschleunigung bis zu einer Maximalgeschwindigkeit auf halber Strecke der translatorischen Bewegung, die daraufhin wieder kontinuierlich abgebremst wird. Dieses Geschwindigkeitsprofil weist den Vorteil auf, dass zum Zeitpunkt der Übernahme sowie der Abgabe eines oder mehrerer Rohre 125 durch das bewegliche Treppenelement 131 nur geringe Geschwindigkeiten vorliegen, dieses somit sanft erfolgt.

Eine alternative Ausgestaltung könnte einen Antrieb des beweglichen Treppenelements mittels eines oder mehrerer pneumatisch oder hydraulisch betriebener Zylinder vorsehen. Das vorteilhafte sinusförmige Geschwindigkeitsprofil könnte dann beispielsweise durch eine entsprechende Ansteuerung der Zylinder erreicht werden.

Der Transport und die Vereinzelung der Rohre 125 in der erfindungsgemäßen Zuführvorrichtung 112 laufen folgendermaßen ab. In einigen der von den Treppensegmenten 130' des statischen Treppenelements 130 gebildeten Treppenstufen 130" ist jeweils ein Rohr 125 positioniert. Die Rohre 125 sollen schrittweise die einzelnen Stufen des statischen Treppenelements 130 weitertransportiert werden, bis diese nacheinander die oberste Treppenstufe erreichen und in eine Übergabeposition 10 rollen, aus der diese mittels eines Greifers 40 entnommen werden können. Das schrittweise Weitertransportieren der Rohre 125 erfolgt dadurch, dass das bewegliche Treppenelement 131 zyklisch relativ zu dem statischen Treppenelement 130 verschoben wird, wobei die Bewegungsrichtung durch die Führungsschienen 151 vorgegeben wird. Bezogen auf ihre jeweiligen Anlageflächen 130b, 131b führen die zwei Treppenelemente demnach eine Parallelbewegung aus (vgl. Fig. 3). Hierbei werden die einzelnen Rohre 125 von den jeweiligen Auflageflächen 131a der Treppenstufen 131' des beweglichen Treppenelements 131 angehoben und von den entsprechenden Auflageflächen 130a des statischen Treppenelements 130 abgehoben und entlang der Anlageflächen 130b des statischen Treppenelements 130 soweit verschoben, bis diese die obere Kante der entsprechenden Treppenstufe 130' des statischen Treppenelements 130 erreicht haben und schwerkraftbedingt in die nächsthöhere Treppenstufe 130' des statischen Treppenelements 130 hineinrollen bzw. -rutschen. Hierbei liegen sie zunächst auf den Auflageflächen 130a des statischen Treppenelements 130 auf und an den Anlageflächen 131b des beweglichen Treppenelements 131 an. Nun erfolgt eine Umkehrung der Bewegungsrichtung des beweglichen Treppenelements 131, wobei die Rohre 125 entlang der Anlageflächen 131 b des beweglichen Treppenelements 131 rutschen bzw. rollen, bis das Treppenelement 131 so weit zurückbewegt wurde, dass die Auflageflächen 131a des beweglichen Treppenelements 131 unterhalb der entsprechenden Auflageflächen 130a des statischen Treppenelements 130 angelangen. Erst dann rutschen bzw. rollen die Rohre 125 vollständig in die jeweilige Treppenstufe 130" des statischen Treppenelements 130, so dass diese auch an den Anlageflächen 130b des statischen Treppenelements 130 zum Anliegen kommen. Sobald das bewegliche Treppenelement 131 wieder seinen unteren Totpunkt erreicht hat, beginnt ein neuer Zyklus, bei dem jeweils das nächste Rohr 125 erfasst und wiederum um eine Treppenstufe 130" nach oben transportiert wird.

Um ein sicheres Weitertransportieren der Rohre 125 zu gewährleisten, sollten die Auflageflächen 131a des beweglichen Treppenelements 131 bzw. der entsprechende Abstand der zwei Treppenelemente 130, 131 zueinander so ausgelegt sein, dass die Rohre 125 zum einen sicher auf den Auflageflächen 131a des beweglichen Treppenelements 131 zum Aufliegen kommen, gleichzeitig jedoch der Abstand zwischen den Anlageflächen 130b, 131b der zwei Treppenelemente 130, 131 so groß ist, dass die Rohre 125 jeweils ausreichend weit in die nächsthöhere Treppenstufe 130" des statischen Treppenelements 130 rutschen bzw. rollen. Um dies zu gewährleisten, ist bei der erfindungsgemäßen Zuführvorrichtung 112 gemäß der Fig. 3 bis 5 vorgesehen, die zwei Treppenelemente 130, 131 zusätzlich bezüglich Ihrer von der zyklischen Bewegung des beweglichen Treppenelements 131 unabhängigen Grundstellung zueinander verschiebbar auszubilden. Diese Verschiebbarkeit ist bei der Zuführvorrichtung 112 der Fig. 3 bis 5 dadurch erzielt, dass das statische Treppenelement 130 horizontal verschiebbar auf Führungselementen 155, die ebenfalls als Führungsschienen ausgebildet sind, angeordnet ist. Entlang dieser Führungselemente 155 kann das statische Treppenelement 130 horizontal verschoben werden, um die Zuführvorrichtung 112 an unterschiedliche Rohrdurchmesser und/oder lange ungerade Rohre 125 anzupassen. Das Verschieben des statischen Treppenelements 130 relativ zu dem beweglichen Treppenelement 131 erfolgt mittels eines hydraulisch oder statisch betriebenen Zylinders 156 .

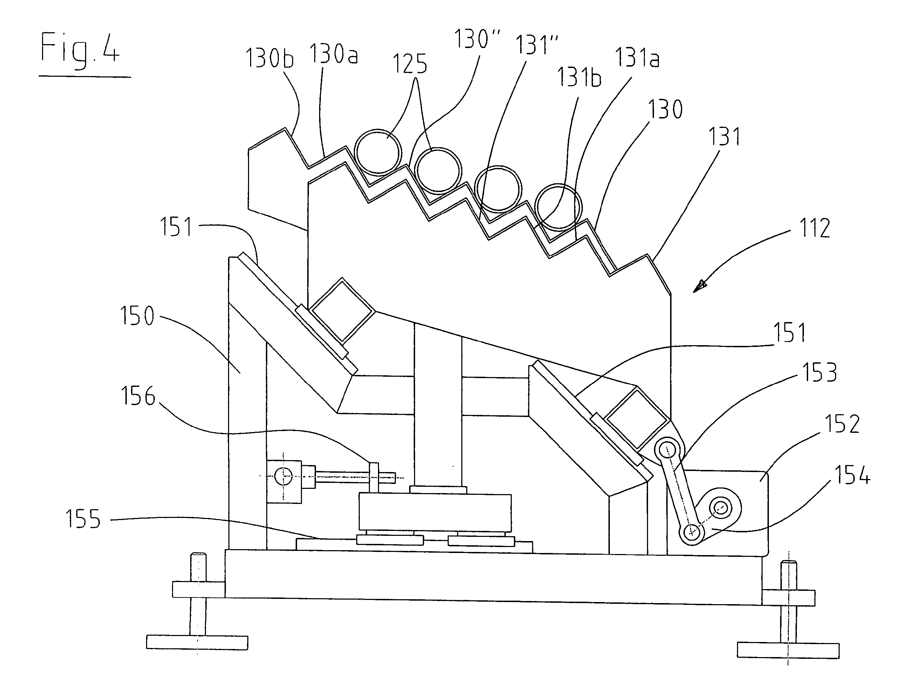

In den Fig. 4.1 und 4.2 ist der Ablauf eines Transportzyklus und die unterschiedlichen Grundstellungen der Treppenelemente 130, 131 zueinander nocheinmal schematisch und in vier Schritten (A bis D) für kleine (Fig. 4.1) und große Rohre (Fig. 4.2) dargestellt.

## Patentansprüche

1. Metallbearbeitungsmaschine mit einer Zuführvorrichtung für stabförmige Werkstücke, wobei die Zuführvorrichtung (12) mindestens zwei Treppenelemente (30, 31) aufweist, die in Bezug aufeinander zur Beförderung der Werkstücke zyklisch verschiebbar gelagert sind, wobei die Treppenelemente eine Mehrzahl von Treppenstufen ausbilden, die jeweils zumindest eine Auflagefläche für die stabförmigen Werkstücke aufweisen, **dadurch gekennzeichnet, dass** die Treppenelemente eine verstellbare relative Auflagefläche aufweisen.

2. Metallbearbeitungsmaschine nach Anspruch 1, **dadurch gekennzeichnet, dass** die Auflageflächen mindestens eines der Treppenelemente (30, 31) verstellbar sind.

3. Metallbearbeitungsmaschine nach Anspruch 1 oder 2, **dadurch gekennzeichnet, dass** mindestens eines der Treppenelemente (30, 31) zur Verstellung der relativen Auflagefläche in Bezug auf das andere Treppenelement verschiebbar ist.

4. Metallbearbeitungsmaschine nach einem der vorhergehenden Ansprüche, **dadurch gekennzeichnet, dass** die Zuführvorrichtung (12) ein Magazin (20) und eine Aufnahme (29) aufweist, wobei die Aufnahme (29) zwischen dem Magazin (20) und den Treppenelementen (30, 31) angeordnet ist.

5. Metallbearbeitungsmaschine nach einem der vorhergehenden Ansprüche, **dadurch gekennzeichnet, dass** die Zuführvorrichtung (12) eine Übergabe (10) aufweist, die zwischen den Treppenelementen (30, 31) und einer Metallbearbeitungseinheit (1) angeordnet ist.

6. Metallbearbeitungsmaschine nach Anspruch 5, **dadurch gekennzeichnet, dass** die Übergabe bezüglich ihrer Achse (P) parallel und in gleicher Höhe zur Achse (B) der Metallbearbeitungseinheit (1) angeordnet ist.

7. Metallbearbeitungsmaschine nach einem der vorhergehenden Ansprüche, **dadurch gekennzeichnet, dass** im Bereich der Übergabe (10) und/oder im Bereich der Aufnahme (29) eine Mess- und Kontrollvorrichtung (18) zur Messung und/oder Veränderung der geometrischen Position und/oder des Zustandes des Werkstücks vorgesehen ist.

8. Metallbearbeitungsmaschine nach einem der vorhergehenden Ansprüche 4 bis 7, **dadurch gekennzeichnet, dass** das Magazin (20) verstellbar an der Aufnahme (29) angeordnet ist.

9. Metallbearbeitungsmaschine nach einem der vorhergehenden Ansprüche, **gekennzeichnet durch** eine in allen Ebenen verstellbare Lagerung der Zuführvorrichtung (12).

10. Metallbearbeitungsmaschine nach einem der vorhergehenden Ansprüche, **dadurch gekennzeichnet, dass** die Treppenelemente (30, 31) aus Gummi oder Kunststoff ausgebildet sind.

11. Metallbearbeitungsmaschine nach einem der vorhergehenden Ansprüche, **dadurch gekennzeichnet, dass** die Treppenelemente magnetische Eigenschaften durch Verwendung eines Magnetpulvers oder eine magnetische Unterlage aufweisen.

12. Zuführvorrichtung einer Metallbearbeitungsmaschine gemäß einem der vorhergehenden Ansprüche.

13. Verwendung einer Zuführvorrichtung gemäß Anspruch 12 zum Transportieren und Separieren stabförmiger Werkstücke, deren Verhältnis von Länge zu Durchmesser bzw. Querschnittsabmessungen sehr groß ist.

14. Verfahren zur Separation und zum Transport metallischer Werkstücke mit einer Vorrichtung gemäß einem der vorhergehenden Ansprüche, **dadurch gekennzeichnet, dass** die metallischen Werkstücke stufig von einem niedrigeren zu einem höheren Punkt bewegt werden.

15. Zuführvorrichtung zur Separation und zum Transport stabförmiger metallischer Werkstücke mit
- mindestens zwei in Bezug aufeinander verschiebbaren oder rotierbaren Treppenelementen (30, 31) mit unterschiedlich breiter Auflagefläche,
- einem Magazin (20) und
- in dem Magazin (20) angeordneten metallischen Werkstücken (25).
